# EUROPÄISCHE PATENTSCHRIFT

(11) **EP 1 430 440 B1**
(45) Veröffentlichungstag und Bekanntmachung des Hinweises auf die Patenterteilung: **31.05.2006**
(21) Anmeldenummer: 02727460.4
(22) Anmeldetag: 22.03.2002
(51) Int. Cl.: G06K 19/073, G06K 9/00, A61B 5/117

(54) **VERWENDUNG EINER PATIENTENKARTE**
USE OF A PATIENT CARD
UTILISATION D'UNE CARTE DE PATIENT

(30) Priorität: 20.09.2001 DE 20115536 U
(43) Veröffentlichungstag der Anmeldung: 23.06.2004
(73) Patentinhaber: Novacard Informationssysteme GmbH, 26135 Oldenburg (DE)
(72) Erfinder: Neymann, Peter-Joachim, Dr. med. dent., 45699 Herten (DE)
(74) Vertreter: Schneiders, Josef
(86) Internationale Anmeldenummer: PCT/EP2002/003244
(87) Internationale Veröffentlichungsnummer: WO 2003/027948

(56) Entgegenhaltungen:
- WO-A-01/61640
- WO-A-98/58509
- WO-A-99/67740
- DE-A- 19 536 204
- DE-A- 19 648 767
- DE-A- 19 742 835
- US-A- 4 614 861
- US-A- 4 868 376
- US-A- 4 973 828
- US-A- 5 193 855
- US-A- 5 801 367
- US-A- 6 012 636
- US-A- 6 023 522
- US-A- 6 042 005
- US-B1- 6 325 285

## Beschreibung

Die Erfindung betrifft die Verwendung einer Patientenkarte mit einem Mikrochip, in dessen integriertem Datenspeicher personenbezogene Daten eines Patienten gespeichert sind, und mit einem Sensorfeld, das den Abgleich eines Fingerabdruckes mit gespeicherten Fingerabdruckdaten ermöglicht.

Die Benutzung von Patientenversicherungskarten hat sich allgemein durchgesetzt. Diese dienen in erster Linie dazu, dem behandelnden Arzt gegenüber einen Versicherungsnachweis zu erbringen und dabei gleichzeitig die benötigten administrativen Daten zur Verfügung zu stellen. Als Patientenversicherungskarten werden üblicherweise Chipkarten in Form einer Scheckkarte aus Plastik verwendet, auf der sich ein hochintegrierter, programmierbarer Mikroprozessor mit Speicher befindet. Für den Benutzer sind derartige Chipkarten gewöhnlich durch die metallischen Kontaktflächen auf der Oberfläche zu erkennen. Neuerdings existieren allerdings auch kontaktlose Systeme, sogenannte Transponderkarten, bei denen der Datenaustausch über eine in die Karte integrierte Induktionsantenne erfolgt. Bei üblichen Chipkarten ist der Datenspeicher meist in einen ROM-Bereich für das Betriebssystem, das sind die permanenten Kartensoftware-Teile, und einen EEPROM-Bereich aufgeteilt, der zur Speicherung von variablen Werten dient. Bei modernen Chipkarten sind die auf dem Chip gespeicherten Daten vor dem Auslesen geschützt, so daß das unbefugte Kopieren weitgehend unmöglich gemacht wird. Durch den Mikroprozessor wird durch Implementierung von geeigneten Datenübertragungsprotokollen der Datenaustausch mit geeigneten Schreib-/Lesegeräten realisiert.

Der Dateninhalt üblicher Patientenversicherungskarten unterliegt datenschutzrechtlichen Bestimmungen. Die heutzutage als Krankenscheinersatz für gesetzliche Krankenversicherungen verwendete Patientenversicherungskarte enthält keinerlei medizinische Daten und dient, wie oben erwähnt, lediglich dem Nachweis der Berechtigung zur Inanspruchnahme von Leistungen sowie für die Abrechnungen mit den Leistungsträgern. Die Krankenversicherungskarte enthält demgemäß Angaben über die Bezeichnung der ausstellenden Krankenkasse, den Familien- und Vorname des Versicherten, dessen Geburtsdatum, die Anschrift, die Krankenversichertennummer, den Versichertenstatus, den Tag des Beginns des Versicherungsschutzes sowie, bei befristeter Gültigkeit der Karte, das Datum des Fristablaufes. Auf der Kartenrückseite enthält die Karte die Unterschrift des Versicherten.

In zunehmendem Maße werden in der letzten Zeit darüber hinausgehende Möglichkeiten des Einsatzes von maschinenlesbaren Patientenkarten diskutiert und erprobt. Beispielsweise die DE 195 36 204 A1 schlägt vor, Chipkarten zur Übertragung und Speicherung medizinisch-klinischer Daten zu verwenden. Die Karte dient insbesondere dazu, bei einem konkret vorliegenden Notfall Diagnose- und Medikationsdaten eines Patienten bereitzustellen, damit beispielsweise festgestellt werden kann, ob möglicherweise Interaktionen von zur Medikamententherapie ausgewählten Arzneimitteln oder Kontraindikationen in Bezug auf Medikamentenallergien auftreten. In Bezug auf die oben angesprochene Datenschutzproblematik schlägt die genannte Patentanmeldung vor, für die Speicherung der relevanten Daten Verschlüsselungstechnologien zu verwenden, wobei ein Zugriff auf die verschlüsselten Daten mittels eines Berechtigungscodes (PIN) erfolgt, über den ausschließlich der Karteninhaber verfügt. Im Hinblick auf die Notfallapplikation wird weiter vorgeschlagen, daß auch Notärzte zum Zugriff auf die verschlüsselten Daten autorisiert werden können.

Problematisch sind solche Karten allerdings dann, wenn der Karteninhaber aufgrund von Erkrankung oder Unfall nicht mehr ansprechbar ist oder verstirbt. In diesem Fall steht der Berechtigungscode des Karteninhabers in der Regel nicht mehr zur Verfügung. Die auf der Karte gespeicherten Daten stehen für einzuleitende Maßnahmen oder eine Behandlung nicht mehr zur Verfügung. In der Regel ist es auch nicht möglich, von den Angehörigen diese Daten kurzfristig zu erhalten.

Eine besondere Problematik ergibt sich, wenn beispielsweise bei einem Unfall eine Person plötzlich verstirbt. Die Spende, Entnahme und Übertragung von menschlichen Organen durch einen Arzt ist bei einem toten Organspender zulässig, wenn der Organspender eingewilligt hat und sein Tod (Hirntod) festgestellt ist. Unzulässig hingegen ist die Organentnahme bei einem Widerspruch des Organspenders. Fehlt eine dementsprechende Erklärung, ist die Zustimmung eines nächsten Angehörigen, beispielsweise des Ehegatten, erforderlich. Da ein großer Bedarf an Organspenden besteht, soll insbesondere über die Krankenversicherungen über die Möglichkeit der Organspende aufgeklärt werden, wobei die Versicherten dazu aufzufordern sind, eine Erklärung zur Organspende, ein sogenanntes Patiententestament, abzugeben. In diesem wird die Einwilligung bzw. der Widerspruch zur Organspende festgehalten oder die Entscheidung auf einen bezeichneten Dritten übertragen.

Tritt in einer Notfallsituation der Tod eines Patienten plötzlich ein, so besteht das Problem, in möglichst kurzer Zeit festzustellen, ob der potentielle Organspender eingewilligt oder widersprochen hat, oder es müssen die Angehörigen ermittelt werden, um festzustellen, ob ein Patiententestament vorliegt, oder um anderenfalls die Zustimmung einzuholen. Die Feststellung der Möglichkeit einer Organspende gestaltet sich dementsprechend oft schwierig und zeitaufwendig. Dies ist besonders nachteilig, da in vielen Fällen die Zeit eine entscheidende Rolle spielt und eine Organentnahme nur sinnvoll ist, wenn die Möglichkeit hierzu frühzeitig festgestellt wird.

Die vorbekannte Chipkarte gemäß der oben genannten deutschen Patentanmeldung trägt zu der beschriebenen Organspendeproblematik nichts bei, da lediglich vorgeschlagen wird, medizinisch-klinische Daten zusätzlich zu den üblichen administrativen Versicherungsdaten zu speichern. Alle personenbezogenen medizinischen Daten sollen verschlüsselt auf der Karte gespeichert werden, so daß diese insbesondere nach Tod des Patienten, der allein zum Zugriff auf die Daten autorisiert ist, nutzlos sind.

Bekannt ist ferner die Verwendung von Organspendeausweisen, welche von Personen, die ihr Einverständnis zur Organentnahme erklärt haben, üblicherweise mitgeführt werden. Die Zahl der Personen, die einen derartigen Ausweis mit sich führen, reicht allerdings bei weitem nicht aus, um der bestehenden Nachfrage an Spendeorganen auch nur annähernd gerecht zu werden. Demgegenüber führt eine wesentlich größere Anzahl von Personen, nämlich jedes Mitglied einer gesetzlichen Krankenversicherung, normalerweise eine Patientenversicherungschipkarte mit sich. Die auf Organspendeausweisen enthaltenen Angaben auf diesen Karten zu speichern, dürfte allerdings aus datenschutzrechtlichen Gründen ausgeschlossen sein.

Eine Patientenkarte ist aus der DE 196 48 767 A1 bekannt. Diese Druckschrift betrifft ein Identifikationssystem mit elektronischer Chipkarte, wobei in die Karte ein biometrischer Sensor in Form eines Fingerabdrucksensors integriert ist. Die vorbekannte Karte dient zur eindeutigen und manipulationssicheren Personenidentifizierung ohne Berechtigungscode (PIN) oder Foto. Die Anwendung der elektronischen Chipkarte im medizinisch-klinischen Bereich wird in der genannten Druckschrift angesprochen.

Eine Chipkarte, die als Patientenkarte Anwendung finden kann und die einen integrierten biometrischen Sensor aufweist, ist außerdem aus der DE 197 42 835 A1 vorbekannt. Die Besonderheit der aus dieser Druckschrift bekannten Karte besteht in einem elektronischen Schrifterkennungssensor und einem integrierten Mikrophon zur Stimmerfassung.

Chipkarten mit integrierten Fingerabdrucksensoren offenbaren weiterhin die Druckschriften US 5,801,367 und US 6,325,285 B1. Die aus der US 5,801,367 vorbekannte Chipkarte weist außer dem Fingerabdrucksensor auch noch ein Datendisplay auf. Die Chipkarte ist als elektronisches Flugticket verwendbar, wobei auf dem Datendisplay Reisedaten zu einer gebuchten Reise anzeigbar sind. Die in der US 6,325,285 B1 vorbeschriebene Karte dient zur Personenidentifizierung und zur Zugriffsberechtigung, beispielsweise zu Telekommunikationseinrichtungen.

Weiterhin sind aus den Druckschriften US 6,012,636 und US 6,042,005 Personenidentifikationssysteme bekannt, bei denen Chipkarten zum Einsatz kommen. Zur Personenidentifikation können die Chipkarten mit separaten Fingerabdrucksensoren verbunden werden, um so Zugriff auf die auf der Karte abgespeicherten Daten zu erlangen oder um die Autorisierung zur Benutzung der Karte zu überprüfen.

Chipkarten, die ein Display und einen Fingerabdruck-Sensor enthalten, sind aus den französischen Patentschriften FR 2 746 201 und FR 2 776 796 bekannt.

Schließlich offenbart die WO 99/67740 A1 ein System zur Ermittlung von persönlichen Daten, die auf einem Mikrochip gespeichert sind. Dieser Mikrochip kann beispielsweise unter der Haut einer Person implantiert sein. Mittels eines berührungslosen Lesegerätes können die auf dem Mikrochip gespeicherten Daten ausgelesen werden.

Die US 4,868,376 offenbart eine tragbare Transaktionskarte mit einem Display, die zur Speicherung medizinischer Daten verwendet werden kann und bei der nach Eingabe einer Geheimzahl über die ebenfalls integrierte Tastatur gespeicherte Daten angezeigt werden.

WO 01/61640 beschreibt eine elektronische Kreditkarte mit einem Display und einem Sensor für Fingerabdrücke.

Aus der US 4,973,828 und aus der US 4,614,861 sind Chipkarten mit Display bekannt.

Bei den aus dem Stand der Technik vorbekannten Chipkarten zum Einsatz im medizinisch-klinischen Bereich ist nachteilig, dass zum Betrieb der Karten und zum Auslesen der in dem Mikrochip der Karten gespeicherten Daten stets ein spezielles Schreib-/Lesegerät erforderlich ist, welches gleichzeitig auch für die Stromversorgung der Chipkarte zuständig ist. Ein geeignetes Schreib-/Lesegerät ist bei einem Unfall oder bei vergleichbaren Notfallsituationen nicht immer verfügbar. Mit den aus dem Stand der Technik vorbekannten Systemen kann daher nicht gewährleistet werden, dass die jeweils auf der Chipkarte gespeicherten patientenbezogenen Daten im Falle der Nicht-Ansprechbarkeit oder des Todes des Patienten jederzeit zur Verfügung stehen. Ohne ein geeignetes Schreib-/Lesegerät sind die bekannten Patientenkarten vollkommen wertlos, da die darauf gespeicherten Daten nicht zugänglich sind.

Vor diesem Hintergrund ist es Aufgabe der Erfindung, eine als Patientenkarte einsetzbare elektronische Chipkarte zu verwenden, welche die Abfrage der auf der Karte gespeicherten patientenbezogenen Daten auch im Falle der Nicht-Ansprechbarkeit oder des Todes des Patienten jederzeit ermöglicht, ohne dass hierzu ein spezielles Schreib-/Lesegerät oder ähnliches erforderlich ist. Insbesondere soll auch ein entsprechendes Verfahren zur jederzeitigen Verfügbarmachung der genannten Daten geschaffen werden.

Diese Aufgabe wird durch die in Anspruch 1 definierte Verwendung einer Patientenkarte gelöst.

Patientenkarten sind dazu bestimmt, von den Karteninhaber mitgeführt zu werden, um im Notfall zur Verfügung zu stehen. Kommt es zu einem Unfall oder einer Erkrankung, können auf der Karte in der Regel die persönlichen Daten des Patienten, die seiner Identifizierung dienen, ohne weiteres abgerufen werden. Zur Aktivierung der persönlichen Patientendaten und weiterer gespeicherter Informationen ist die Aktivierung der Karte über den Abgleich des Fingerabdruckes des Trägers, beispielsweise des rechten Zeigefingers, mit gespeicherten Fingerabdruckdaten notwendig. Ist der Patient ansprechbar, kann er die Daten persönlich aktivieren. Ist der Patient nicht ansprechbar und besteht Lebensgefahr oder im Falle seines Todes, kann beispielsweise der behandelnde Arzt nach Feststellung des Zustandes des Patienten die Aktivierung über einen Abgleich von Fingerabdruckdaten vornehmen.

Die Patientenkarte weist ein Datendisplay auf, auf dem die gespeicherten Daten dargestellt werden können. Zusätzlich zum Datendisplay ist wenigstens eine Funktion zur Steuerung der Darstellung gespeicherter Daten auf dem Display erforderlich. Diese kann beispielsweise im Tasten zu Vor- und Zurückblättern bestehen, aber auch in einer sogenannten Steuerrose, die das Vor- und Zurückblättern erlaubt wie auch das Ansteuern von auf dem Display dargestellten Funktionen und deren Aktivierung. Insbesondere ist mit einer derartigen üblichen Steuerrose auch die Eingabe und Löschung von Daten erforderlich.

Zusätzlich kann die Patientenkarte über Eingabetasten, insbesondere numerische Eingabetasten verfügen, wie sie beispielsweise von Taschenrechnern im Scheckkartenformat her bekannt sind.

Die Karte ist vorzugsweise in einen flachen und einen dicken, stärkeren Teil aufgeteilt, wobei ersterer zur Einführung in herkömmliches Kartengerät und letzterer zur Aufnahme elektronischer Bauteile bestimmt ist. Der flache Kartenteil verfügt in der Regel über die Mikrochipfunktion, die im Kartenlesegerät an den Kontaktstellen abgegriffen werden kann. Der dickere Teil mit den elektronischen Bauteilen verfügt über die Steuerelektronik, die Sensortechnik und gegebenenfalls weitere Module sowie über die gegebenenfalls zum Betrieb benötigten Batterien. Eine Anschlussmöglichkeit an ein Mobiltelefon kann sinnvoll sein, beispielsweise, um die Energieversorgung des Mobiltelefons für die Patientenkarte zu nutzen oder auch um Daten aus der Patientenkarte telefonisch, beispielsweise an einen Unfallwagen oder eine Klinik zu übertragen.

Patientenkarten sind dazu bestimmt, wie oben erwähnt, von den Inhabern mitgeführt zu werden. Insbesondere Risikopatienten werden die Karten in der Regel ständig bei sich führen.

Kommt es beispielsweise zu einem tödlichen Unfall, so steht die Information betreffend das Patiententestament sofort zur Verfügung, um die Möglichkeit einer Organentnahme zu ermitteln. Beispielsweise kann der vollständige Inhalt des Patiententestamentes zentral hinterlegt sein. Hierzu kommt beispielsweise die betreffende Krankenkasse bzw. ein zentral geführtes Organspenderegister in Frage. Die Karte enthält dann lediglich ein binäres Datum, durch welches ausschließlich angezeigt wird, ob ein Patiententestament vorhanden ist oder nicht. Zu dem genauen Inhalt des Patiententestamentes werden zunächst keine Angaben gespeichert. In diesem Fall dürften der erfindungsgemäßen Patientenversicherungskarte auch keine datenschutzrechtlichen Bedenken entgegenstehen. Durch die Speicherung eines einzigen zusätzlichen binären Wertes wird also das Verfahren zur Einholung der benötigten Einwilligung zur Organentnahme erheblich vereinfacht und beschleunigt. Bei hinreichender Speicherkapazität stellt aber auch die auszugsweise oder vollständige Speicherung von Verfügungen kein Problem dar.

Eine vorteilhafte Weiterbildung der erfindungsgemäßen Chipkarte besteht darin, in den Datenspeicher der Chipkarte die Blutgruppe und weitere medizinische Notfalldaten des Karteninhabers zu speichern. In Notfallsituationen kann die Kenntnis der Blutgruppe eines Patienten entscheidend sein, insbesondere wenn aufgrund von Blutverlust Transfusionen erforderlich sind. Ist die Blutgruppe nicht bekannt, so ist ein entsprechender Test erforderlich, der eine unerwünscht lange Zeit in Anspruch nimmt. Ein frühzeitiges Wissen um die Blutgruppe kann lebensrettend sein, ebenso das Wissen um beispielsweise Medikamentenunverträglichkeiten.

Sinnvoll ist es ferner, in dem Datenspeicher der Chipkarte Diagnose- und Medikationsdaten verschlüsselt oder anderweitig gegen unbefugte Zugriffe geschützt zu speichern. Derartige Informationen sind in Notfallsituationen, wie oben beschrieben, von großem Nutzen. Aus datenschutzrechtlichen Gründen müssen die patientenbezogenen medizinischen Daten jedoch verschlüsselt gespeichert werden, wobei eine Autorisierung zum Zugriff auf die betreffenden Daten durch den Karteninhaber selbst erfolgen kann. Der auf Chipkarten üblicherweise vorhandene Mikroprozessor ermöglicht die aktive Durchführung von geeignete kryptographischen Verfahren, so daß selbst bei Umgehung von bestimmten Zugriffsprotokollen keine Möglichkeit besteht, daß unbefugte Dritte Kenntnis über die gespeicherten Daten erlangen.

Die vorliegende Erfindung schlägt vor, entweder die Chipkarte mit einer Programmsteuerung zu versehen, durch welche eine Ver- und Entschlüsselung von in dem Datenspeicher enthaltenen patientenbezogenen Daten mittels Fingerabdruckdaten durchgeführt wird, oder aber mittels der Programmsteuerung den Zugriffs auf den Dateninhalt der Chipkarte zu kontrollieren, wobei eine Berechtigung zum Zugriff anhand der biometrischen Daten des Karteninhabers festgestellt wird. Die biometrischen Daten können somit gewissermaßen als Passwort zum Zugriff auf die patientenbezogenen medizinischen Daten verwendet werden. Eine Berechtigung zum Zugriff wird durch die Kartensoftware festgestellt, sobald sich der Karteninhaber mittels seines Fingerabdrucks identifiziert. Selbst wenn sich der Karteninhaber in einer Notfallsituation im Zustand der Bewusstlosigkeit befindet, ist es gemäß der Erfindung vorteilhafterweise möglich, mittels seines Fingerabdrucks Zugang zu den benötigten Daten zu erlangen.

Es ist außerdem möglich, auf einer mittels biometrischer Daten gegen unbefugte Zugriffe gesicherten Chipkarte den vollständigen Inhalt des Patiententestamentes des Karteninhabers zu speichern. Die Daten sind sicher gegen unberechtigte Zugriffe geschützt, wenn die Daten verschlüsselt werden und nur mittels der biometrischen Daten entschlüsselbar sind. Auch nach dem Tod des Karteninhabers ist mittels seiner biometrischen Daten ein Zugriff auf das Patiententestament sofort möglich, so daß innerhalb kürzester Zeit festgestellt werden kann, ob der verstorbene Karteninhaber zuvor in eine Organentnahme eingewilligt hat oder nicht. Durch die Verschlüsselung des auf der Karte gespeicherten Patiententestamentes mittels des Fingerabdrucks des Karteninhabers wird wirkungsvoll vermieden, daß diese Daten mit dem Tod des Patienten nutzlos werden.

Eine sinnvolle Weiterbildung der Karte besteht darin, in dem Datenspeicher Informationen zu speichern, die eine Stammzellen-Hinterlegung des Karteninhabers betreffen. Die Therapie mit Stammzellen hat sich zur Behandlung von Blutkrebs bereits etabliert. In Zukunft wird die Therapie mit Stammzellen zur Regenerierung geschädigter Organe an Bedeutung gewinnen. Indem die Stammzellen-Hinterlegung in dem Datenspeicher der Karte dokumentiert wird, besteht die Möglichkeit, in Frage kommende Spender von Stammzellen einfacher ausfindig zu machen. Derzeit werden auch die Möglichkeiten von Therapien mit eigenen hinterlegten Stammzellen diskutiert. Es ist beispielsweise denkbar, bei der Geburt Stammzellen aus dem Nabelschnurblut zu gewinnen. Diese Stammzellen können dann durch Einfrieren für einen späteren Therapieeinsatz konserviert werden. Anhand der Patientenversicherungskarte kann erfindungsgemäß bei jedem Patienten jederzeit festgestellt werden, ob und wo Stammzellen für solche Therapiezwecke hinterlegt wurden.

Zur einfachen und sicheren Zuordnung einer Patientenversicherungskarte zu einem Karteninhaber ist es ferner zweckmäßig, auf der Chipkarte ein Lichtbild des Karteninhabers anzubringen.

Die Erfindung wird durch die nachfolgenden Abbildungen näher erläutert.
- Figur 1: zeigt eine Patientenkarte und
- Figur 2: eine Karte, welche zusätzlich ein Tastaturfeld aufweist.

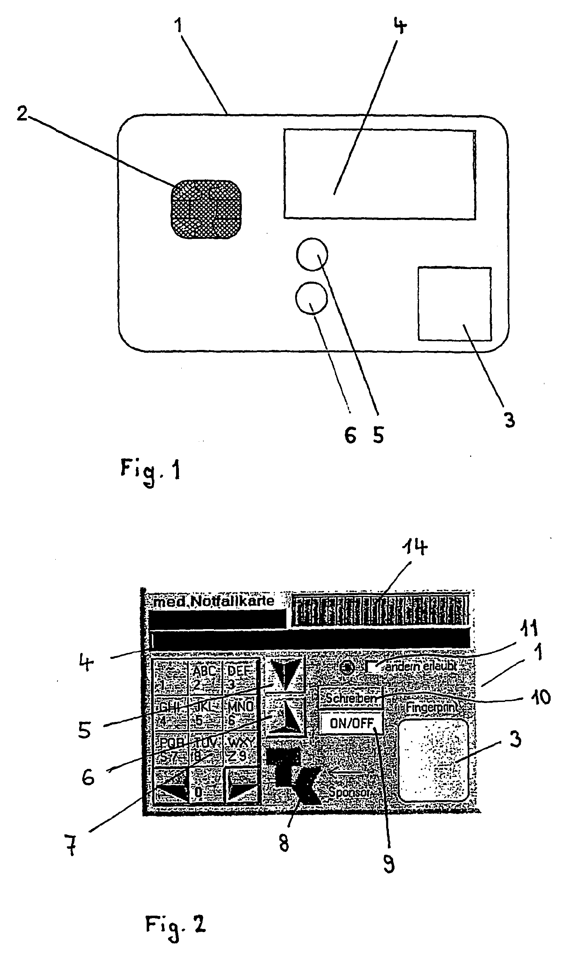

Figur 1 zeigt eine Patientenkarte 1, die das Format einer Scheckkarte hat und aus Plastikmaterial besteht. In die Karte integriert ist ein Chip 2, dessen Kontaktflächen auf der Oberseite der Karte sichtbar sind. Auf der Oberfläche des Trägermaterials der Chipkarte 1 können verschiedene Aufdrucke angebracht sein, die die auf dem Chip 2 gespeicherten Daten zumindest teilweise wiedergeben oder ergänzen. Möglich sind beispielsweise die Angabe des Namens, die Angabe der jeweiligen Krankenversicherung, möglicherweise mit einem Logo, sowie beispielsweise eine Kassennummer, durch welche ebenfalls die Krankenkasse bezeichnet wird. Hinzu kann eine Krankenversichertennummer kommen, die beispielsweise den Versichertenstatus angibt. Möglich sind ferner die Angabe eines Ablaufdatums und die Integration eines Lichtbildes des Karteninhabers.

Zu den wesentlichen Funktionen der Karte gehört ein Sensorfeld 3, um einen darauf gehaltenen Finger anhand seines Linienmusters durch Abgleich mit einem gespeicherten Muster zu identifizieren. Die Ziffer 4 bezeichnet ein Display, auf dem gespeicherte Daten dargestellt werden können. Die Funktionen 5 und 6 dienen dazu, die elektronischen Funktionen ein- bzw. auszuschalten sowie die Datendarstellung auf dem Display 4 vor- und zurückzublättern.

Figur 2 zeigt eine weitere Variante der Patientenkarte, bei der der Mikrochip voll integriert ist und von außen nicht abgreifbar ist. Die Karten selbst können über ein Tastaturfeld 7 eingegeben und über ein Display 4 dargestellt werden. Die Tastatur 7 ist eine Tastatur, wie sie herkömmlicherweise in Scheckkartenrechnern oder Telefonen verwandt wird. Weitere Funktionstasten 5 und 6 dienen dazu, auf dem Display 4 dargestellte Daten vor- und zurückzublättern.

Die Ziffer 8 gibt das Logo der Versicherung wieder, die Ziffer 9 ist ein An- und Ausschalter. Mit der Taste 10 wird die Beschriftung aktiviert, sofern die Karte nicht für eine Änderung der darauf gespeicherten Daten blockiert ist, was sich aus dem Datenfeld 11 ergibt. Die Ziffer 14 bezeichnet ein Solarzellenfeld für die Energieversorgung, sofern die Karte nicht mit einer externen Energiequelle oder mit Batterien betrieben wird.

## Patentansprüche

1. Verwendung einer Patientenkarte (1)
- in Form einer Scheckkarte aus Plastik,
- mit einem Mikrochip (2), in dessen integriertem Datenspeicher personenbezogene Daten eines Karteninhabers gespeichert sind,
- mit einem Datendisplay (4),
- und mit einem Sensorfeld (3), das den Abgleich eines Fingerabdruckes mit gespeicherten Fingerabdruckdaten ermöglicht,
- wobei die Karte mittels einer Programmsteuerung zur Freigabe der gespeicherten Patientendaten bei Übereinstimmung gespeicherter und detektierter Fingerabdruckdaten eingerichtet ist,
zur Anzeige der personenbezogenen Daten des Karteninhabers im Falle der Nicht-Ansprechbarkeit oder des Todes des Karteninhabers, nach Feststellung des Zustandes des Karteninhabers durch Aktivierung der Karte über den Abgleich des Fingerabdruckes des nicht ansprechbaren oder toten Karteninhabers mit Hilfe einer weiteren Person.

2. Verwendung nach Anspruch 1 zur Verfügbarmachung von Daten eines in dem Datenspeicher der Karte gespeicherten Patiententestaments.

3. Verwendung nach Anspruch 1 oder 2 zur Verfügbarmachung von Informationen, die eine Stammzellen-Hinterlegung des Karteninhabers betreffen.

4. Verwendung nach einem der Ansprüche 1 bis 3 zur Verfügbarmachung immunologischer Daten des Patienten.

5. Verwendung nach einem der Ansprüche 1 bis 4 zur Verfügbarmachung von Diagnose- und/oder Medikationsdaten, die in verschlüsselter oder anderweitig gegen unbefugte Zugriffe geschützter Weise in dem integrierten Datenspeicher der Karte (1) gespeichert sind.

6. Verwendung nach einem der Ansprüche 1 bis 5, wobei die Karte (1) eine weitere Programmsteuerung aufweist, durch welche eine Ver- und Entschlüsselung von in dem Datenspeicher enthaltenen patientenbezogenen Daten anhand der Fingerabdruckdaten durchgeführt wird.

7. Verwendung einer Patientenkarte (1) nach einem der Ansprüche 1 bis 6,
wobei die weitere Person der behandelnde Arzt ist.

## Claims

1. Use of a patient card (1)
- in the form of a cheque card of plastic
- having a microchip (2), in the integrated data memory of which are stored person-related data of a card holder,
- having a data display (4),
- and having a sensor field (3) which permits the comparison of a fingerprint with stored fingerprint data,
- wherein the card is adapted by means of a program control to release the stored patient data upon identity of stored and detected fingerprint data,
for the display of the person-related data of the card holder in the case of non-responsiveness or death of the card holder, after establishing the condition of the card holder by activation of the card by way of the comparison of the fingerprint of the non-responsive or dead card holder by means of a further person.

2. Use according to claim 1 for making available data of a patient testament stored in the data memory of the card.

3. Use according to claim 1 or claim 2 for making available items of information which concern a stem cell deposit of the card holder.

4. Use according to one of claims 1 to 3 for making available immunological data of the patient.

5. Use according to one of claims 1 to 4 for making available diagnosis and/or medication data which are stored in the integrated data memory of the card (1) in encrypted form or in a manner protected in another fashion from unauthorised accesses.

6. Use according to one of claims 1 to 5 wherein the card (1) has a further program control, by means of which encryption and decryption of patient-related data contained in the data memory are implemented by means of the fingerprint data.

7. Use of a patient card (1) according to one of claims 1 to 6 wherein the further person is the treating doctor.

## Revendications

1. Utilisation d'une carte de patient (1)
- sous la forme d'une carte de chèque en plastique,
- avec une micro-puce (2) dans la mémoire de données intégrée de laquelle sont stockées des données se rapportant à la personne d'un titulaire de carte,
- avec un affichage des données (4),
- et avec un champ de détection (3) qui permet la comparaison d'une empreinte de doigt avec des données d'empreinte de doigt stockée,
- où la carte est réalisée, au moyen d'une commande par programme, pour libérer les données de patient stockées lors d'une coïncidence des données d'empreinte de doigt stockées et détectées, pour l'affichage des données se rapportant à la personne du titulaire de la carte dans le cas d'une non réponse ou de la mort du titulaire de carte, après la constatation de l'état du titulaire de la carte par l'activation de la carte au moyen de la comparaison de l'empreinte de doigt du titulaire de carte ne répondant pas ou mort à l'aide d'une autre personne.

2. Utilisation selon la revendication 1, pour la mise à disposition de données d'un testament du patient stocké dans la mémoire de données de la carte.

3. Utilisation selon la revendication 1 ou 2, pour la mise à disposition d'informations qui concernent un dépôt de cellules souches du titulaire de la carte.

4. Utilisation selon l'une des revendications 1 à 3, pour la mise à disposition de données immunologiques du patient.

5. Utilisation selon l'une des revendications 1 à 4, pour la mise à disposition de données de diagnostic et/ou de médication qui sont stockées de manière codifiée ou protégée autrement contre des accès non autorisés dans la mémoire de données intégrée de la carte (1).

6. Utilisation selon l'une des revendication 1 à 5, ou la carte (1) présente une autre commande par programme par laquelle est exécuté une codification et un décodage de données se rapportant au patient contenues dans la mémoire de données à l'aide des données d'empreinte de doigt.

7. Utilisation d'une carte de patient (1) selon l'une des revendications 1 à 6, où l'autre personne est le médecin traitant.
